# EUROPÄISCHE PATENTSCHRIFT

(11) **EP 0 624 554 B1**
(45) Veröffentlichungstag und Bekanntmachung des Hinweises auf die Patenterteilung: **30.10.2002**
(21) Anmeldenummer: 94106090.7
(22) Anmeldetag: 20.04.1994
(51) Int. Cl.: C02F 3/06

(54) **Festbettreaktor**
Fixed bed reactor
Réacteur à lit fixe

(30) Priorität: 07.05.1993 DE 4315312
(43) Veröffentlichungstag der Anmeldung: 17.11.1994
(73) Patentinhaber: Schwarting Umwelt GmbH, 24941 Flensburg (DE); FRAUNHOFER-GESELLSCHAFT ZUR FÖRDERUNG DER ANGEWANDTEN FORSCHUNG E.V., 80636 München (DE)
(72) Erfinder: Schwarting, Norbert, D-88085 Langenargen (DE); Trösch, Walter Dr. rer. nat., D-70619 Stuttgart (DE)
(74) Vertreter: Engelhardt, Guido

(56) Entgegenhaltungen:
- EP-A- 0 356 870
- EP-A- 0 389 958
- FR-A- 2 446 259

## Beschreibung

Die Erfindung bezieht sich auf einen Festbettreaktor zum mikrobiellen Abbau und/oder zur mikrobiellen Umwandlung organisch belasteter Substrate, bestehend aus mindestens einem Aufnahmebehälter und einem in diesem eingeschütteten Trägermedium zum Ansiedeln der Bakterien, das von der zu reinigenden Flüssigkeit durchströmbar ist, wobei in dem Aufnahmebehälten eine oder mehrere von dem Trägermedium vertikal durchströmbare durch vorzugsweise zentrisch in den Aufnahmebehälter eingesetzte Standrohre gebildete Wirbelkammern (11) angeordnet sind.

EP-A- 0 356 870 offenbart einen Reaktor zum mikrobiellen Abbau und/oder zur mikrobiellen Umwandlung organisch belasteter Flüssigkeiten, bestehend aus mindestens einem Aufnahmebehälter und in diesen eingeschütteten Trägerkörpern zum Ansiedeln der Bakterien, der von der zu reinigenden Flüssigkeit durchströmbar ist, wobei in dem Aufnahmebehälter zumindest ein von den Trägerkörpern vertikal durchströmbares Standrohr angeordnet ist. Durch ein axial gerichtetes Einblasen eines Gas- oder Flüssigkeitsstrahls oder mittels einer vertikalen Schnecke werden die Trägerkörper zur Abtrennung von Biomasse aufwärts durch das Standrohr geführt. Die Aufwärtsbewegung durch Gas- oder Flüssigkeitslift beruht auf einer Mammutpumpenwirkung.

Durch die DE-A1-39 29 049 ist ein weikrer Reaktor bekannt. Das Trägermedium ist hierbei in einem dem inneren Querschnitt des Aufnahmebehälters angepaßten. Behälter eingesetzt, der zum Aufwirbeln des Trägermediums höhenverstellbar und/oder rotierend antreibbar ist. Obwohl somit das Trägermedium zumindest zeitweise in dem Substrat bewegt wird, ist die Betriebsdauer dieses Reaktors begrenzt, da die sich an den einzelnen Teilen des Trägermediums festsetzende überschüssige Biomasse durch die geringfügige Bewegung nur unzulänglich abzulösen ist. An dem Trägermedium haftet demnach auch bei diesem Reaktor - wie auch bei Reaktoren mit einem ortsfesten Verteilerboden zur Lagerung des Trägermediums-nach relativ kurzer Zeit eine derart große Menge an Biomasse, daß eine Durchströmung des Festbettes nicht mehr möglich ist. Dieses muß in derartigen Fällen entfernt und ein neues Trägermedium ist in den Aufnahmebehälter einzubringen. Dies ist aber nicht nur zeitund kostenaufwendig, sondern vor allem ist von Nachteil, daß der Reaktor über einen längeren Zeitraum nicht genutzt werden kann.

Aufgabe der Erfindung ist es daher, einen Festbettreaktor der eingangs genannten Gattung zu schaffen, dessen :Trägermedium während des Betriebes des Reaktors, ohne daß dieser somit stillzusetzen ist, von der überschüssigen Biomasse befreit werden kann. Der dazu erforderliche Bau- und Energieaufwand soll gering gehalten werden, dennoch soll es möglich sein, die einzelnen Teile des Trägermediums so weit zu reinigen, daß die auf deren Oberfläche angesammelte Biomasse mehr oder weniger entfernt wird und aus dem Aufnahmebehälter abzuführen ist, die in den Poren befindliche Biomasse aber erhalten bleibt. Außerdem soll das Festbett des Reaktors, ohne daß dieser dazu außer Betrieb zu setzen ist, ohne Schwierigkeiten umzuschichten sein, so daß Betriebsunterbrechungen nicht in Kauf zu nehmen sind.

Gemäß der Erfindung wird dies bei einem Festbettreaktor der vorgenannten Art dadurch erreicht, daß das Trägermedium jeweils mittels eines Flüssigkeitsstrahls in eine Wirbelkammer einbringbar ist, derart, daß vor der Wirbelkammer in dem Trägermedium eine Injektordüse angeordnet ist, mittels der der Flüssigkeitsstrahl der Wirbelkammer zuführbar ist und daß der Flüssigkeitsstrahl aus der gereinigten Flüssigkeit entnommen ist.

Die Wirbelkammer kann hierbei in einfacher Ausgestaltung jeweils durch ein vorzugsweise zentrisch in den Aufnahmebehälter eingesetztes Standrohr gebildet und sollte derart in dem Aufnahmebehälter angeordnet sein, daß der Einlaßöffnung in dem Trägermedium und deren Auslaßöffnung in der dieses durchströmten Flüssigkeit mündet.

Sehr vorteilhaft ist es auch, die Wirbelkammer zur Umlenkung der Strömung mit Einbauten in Form von Stegen, Lochblechen oder dgl. zu versehen.

Zur Einbringung des Trägermediums in die Wirbelkammer ist es ferner zweckmäßig, vor dieser in dem Trägermedium eine Injektordüse oder dgl. anzuordnen, mittels der der Flüssigkeitsstrahl der Wirbelkammer zuführbar ist, wobei der Injektordüse über eine mit einer steuerbaren Förderpumpe versehenen Leitung vorzugsweise impulsweise oder in einstellbaren Zeitabständen die das Trägermedium durchströmte Flüssigkeit zugeführt werden sollte.

Angebracht ist es des weiteren, das Trägermedium im unteren Bereich des Aufnahmetanks in diesen einzuschütten und die Injektordüse unterhalb der Wirbelkammer anzuordnen, das Trägermedium kann aber auch im oberen Bereich des Aufnahmetanks vorgesehen und die Injektordüse über der Wirbelkammer angeordnet werden.

Zur Einbringung des Substrates sollte der Aufnahmebehälter eine vorzugsweise in den vertikal unteren Bereich des Trägermediums in dieses einmündenden Einlaßleitung aufweisen, es ist aber auch möglich, die Einlaßleitung unmittelbar an die Injektordüse oder an die dieser zugeordneten Zuführungsleitung anzuschliessen.

Zweckmäßig ist es auch, den Aufnahmebehälter mit einem kegelstupfartig ausgebildeten Boden und eine in diesem vorgesehene wahlweise zu öffnende Austragöffnung zu versehen, so daß sich absetzende Feststoffe leicht zu entfernen sind.

Außerdem sollte der Aufnahmetank eine vorzugsweise mit einem Syphon versehene Überlaufleitung oder eine mit einem Absperrventil ausgestattete Entnahmeleitung zur Ausbringung der gereinigten Flüssigkeit aufweisen.

Wird ein Festbettreaktor gemäß der Erfindung mit einer von dem Trägermedium durchströmbaren Wirbelkammer versehen, in die dieses mittels eines Flüssigkeitsstrahles einzubringen ist, so ist es möglich, die an den das Festbett bildenden Teilen des Trägermediums haftende überschüssige Biomasse auf einfache Weise in der Wirbelkammer von diesen zu entfernen und somit das Trägermedium zu reinigen, ohne daß dieses dazu aus dem Aufnahmebehälter herauszunehmen ist. Beim Durchströmen der als Standrohr auszubildenden Wirbelkammer zusammen mit einem Flüssigkeitsstrahl wird vielmehr die überschüssige Biomasse von den Teilen des Trägermediums abgeschert und kann ohne weiteres dem Aufnahmebehälter entnommen werden. Die in den Poren der Teile des Trägermediums eingebettete Biomasse bleibt dagegen erhalten, die Funktion des Festbettes wird somit durch diese Reinigung nicht beeinträchtigt.

Durch den z. B. mittels einer Injektordüse auf die Mündung der Wirbelkammer gerichteten Flüssigkeitsstrahl, wobei dieser zweckmäßigerweise durch bereits gereinigte Flüssigkeit zu bilden ist, werden aus dem die Wirbelkammer umgebenden Festbett nach dem Wasserstrahlprinzip einzelne Teile herausgelöst, in den Flüssigkeitsstrahl eingesaugt und dann durch die Wirbelkammer transportiert. Dabei wird entsprechend der gewählten Strömung und/oder den vorgesehenen Einbauten die überschüssige Biomasse mehr oder weniger abgeschert. Da die Scherung definiert eingestellt werden kann, wird beim Durchströmen des Trägermediums durch die Wirbelkammer ein Materialabrieb und/oder eine Zerstörung des Trägermediums zuverlässig verhindert.

Das in dieser Weise gereinigte Trägermedium wird erneut aufgeschüttet, ein vorschlagsgemäß ausgebildeter Festbettreaktor weist demnach eine nahezu unbegrenzte Lebensdauer auf, und zwar bei gleichbleibendem Betriebsverhalten. Durch die Umschichtung des Festbettes werden nämlich alle Teile des Trägermediums von Zeit zu Zeit frischem Substrat ausgesetzt. Die begünstigt nicht nur deren Bewuchs mit Biomasse, sondern führt auch zu einem homogenen Biomassebewuchs.

Der dazu erforderliche Bauaufwand in Form eines Standrohres als Wirbelkammer mit zugeordneter Injektordüse ist gering, auch ist nur ein geringer Energiebedarf nötig, um das Trägermedium mit Hilfe des Flüssigkeitsstrahles jeweils durch eine Wirbelkammer zu transportieren. Betriebsunterbrechungen des Reaktors, um dessen Festbett zu reaktivieren, entfallen gänzlich, auch ist ein störungsfreier Betrieb über einen langen Zeitraum gegeben.

In der Zeichnung ist ein Ausführungsbeispiel eines gemäß der Erfindung ausgebildeten Festbettreaktors dargestellt, das nachfolgend im einzelnen erläutert ist. Hierbei zeigt, jeweils in schematischer Darstellung und in einem Axialschnitt:
- Figur 1: einen Festbettreaktor mit einer von unten nach oben durchströmbaren Wirbelkammer und
- Figur 2: den Festbettreaktor nach Figur 1 mit von oben nach unten durchströmbarer Wirbelkammer.

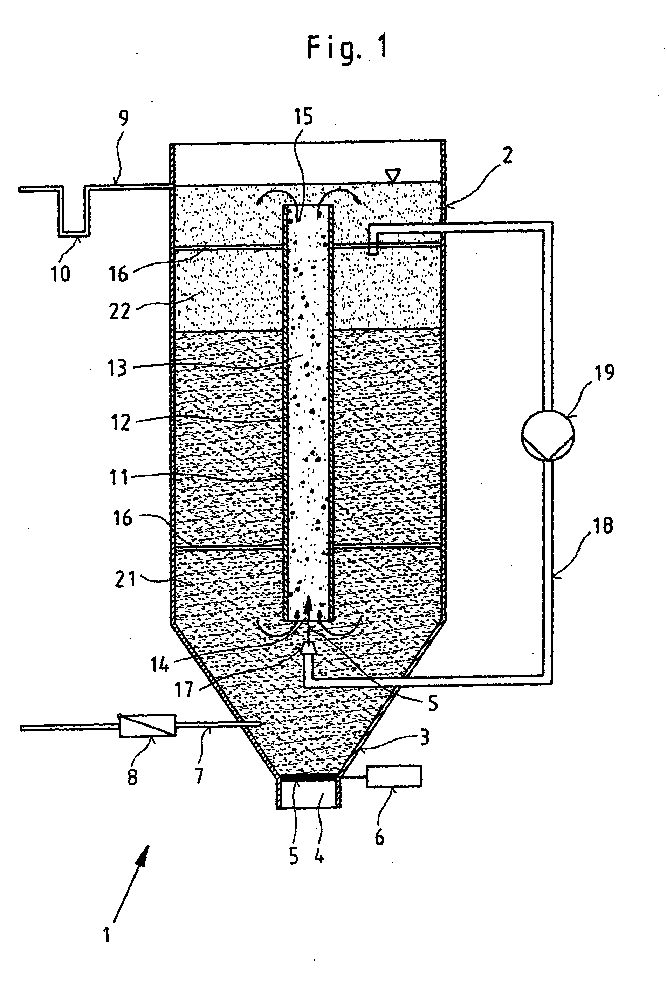

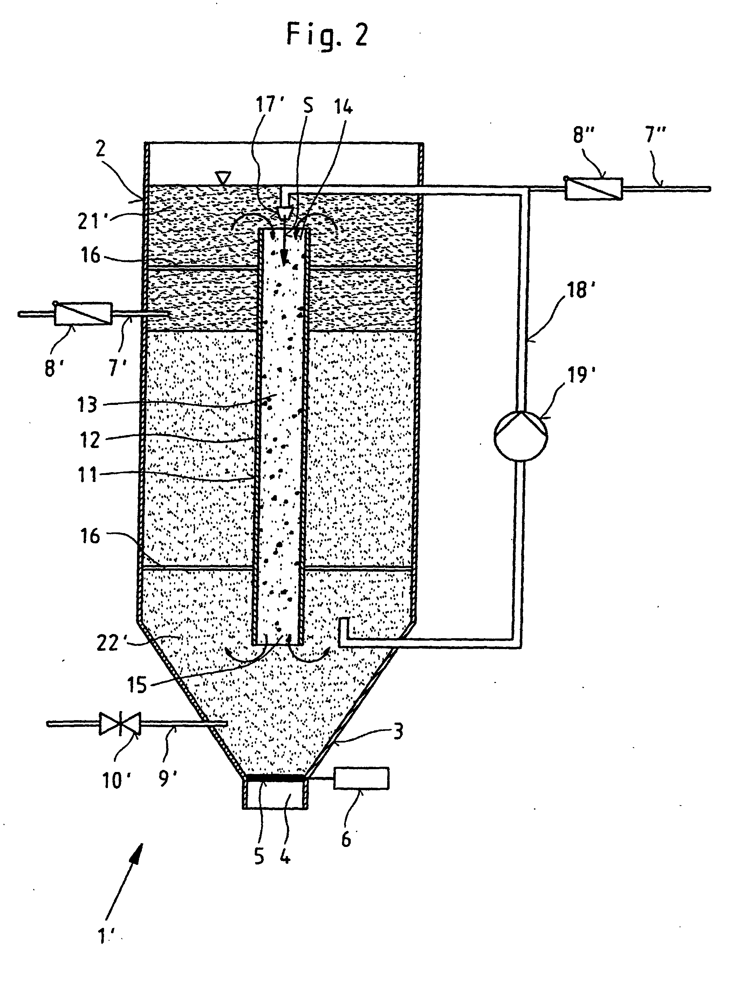

Der in den Figuren 1 und 2 dargestellte und mit 1 bzw. 1' bezeichnete Festbettreaktor dient zum mikrobiellen Abbau bzw. zur mikrobiellen Umwandlung organisch belasteter Substrate und besteht im wesentlichen aus einem Aufnahmebehälter 2 für das zu reinigende Substrat, in den ein von diesem durchströmbares Trägermedium 21 bzw. 21' zum Ansammeln der Bakterien eingeschüttet ist. Der Aufnahmebehälter 2 ist hierbei mit einem kegelstumpfartig ausgebildeten Boden 3 ausgestattet, der eine wahlweise zu öffnende Austragöffnung 4 aufweist. Dazu dient ein durch einen Motor 6 betätigbarer Schieber 5, so daß sich absetzende Feststoffe von Zeit zu Zeit aus dem Aufnahmebehälter 2 leicht entfernt werden können.

Das zu reinigende Substrat wird jeweils über eine Einlaufleitung 7 bzw. 7' in den Aufnahmebehälter 2 eingebracht. Die Einlaufleitung 7 bzw. 7' ist mit einem Absperrventil 8 bzw. 8' versehen und mündet jeweils im vertikal unteren Bereich des Trägermediums 21 bzw. 21'. Außerdem ist dem Aufnahmebehälter 2 zur Entnahme der gereinigten Flüssigkeit 22 bzw. 22' eine mit einem Syphon 10 versehene Überlaufleitung 9 bzw. ein mit einem Absperrventil 10' ausgestattete Entnahmeleitung 9' zugeordnet. Das mittels der Einlaufleitung 7 bzw. 7' in den Aufnahmebehälter 2 eingebrachte Substrat durchströmt somit das Trägermedium 21 bzw. 21' von unten nach oben bzw. von oben nach unten und wird dabei gereinigt, so daß mit Hilfe der Überlaufleitung 9 bzw. der Entnahmeleitung 9' aus dem Reaktor 1 bzw. 1' die gereinigte Flüssigkeit 22 bzw. 22' abgeführt werden kann.

Um die an den einzelnen Teilen des Trägermediums 21, 21' haftende Biomasse zumindest von Zeit zu Zeit von diesen zu entfernen, ist der Festbettreaktor 1 bzw. 1' mit einer Wirbelkammer 11 ausgestattet, in die das Trägermedium 21 bzw. 21' mittels eines Flüssigkeitsstrahles S einbringbar ist. Dazu ist der als zentrisch in dem Aufnahmebehälter 2 angeordnetes Standrohr 12 ausgebildeten Wirbelkammer 11 eine Injektordüse 17 bzw. 17' zugeordnet, aus der der Flüssigkeitsstrahl S austritt. Die Injektordüse 17 bzw. 17' ist hierbei über eine mit einer Förderpumpe 19 bzw. 19' versehenen Leitung 18 bzw. 18' mit dem die gereinigte Flüssigkeit 22 bzw. 22' aufnehmenden Bereich des Aufnahmebehälters 2 verbunden, so daß der Flüssigkeitsstrahl S, der zweckmäßigerweise impulsweise in die Wirbelkammer 11 eingeleitet wird, aus der gereinigten Flüssigkeit 22 bzw. 22' besteht. An die Leitung 18 - oder unmittelbar an die Injektordüse 17 bzw. 17' - kann, wie dies in Figur 2 mit eingezeichnet ist, ebenfalls eine mit einem Absperrventil 8'' versehene Einlaufleitung 7'' angeschlossen sein.

Die Wirbelkammer 11 ist jeweils derart angeordnet, daß deren Einlaßöffnung 14 in dem Trägermedium 21 bzw. 21' und deren Auslaßöffnung 15 in der gereinigten Flüssigkeit 22 bzw. 22' mündet. Bei der Ausgestaltung nach Figur 1 wird der Innenraum 13 des die Wirbelkammer 11 bildenden Standrohres 12, das mittels Haltern 16 an dem Aufnahmebehälter 2 abgestützt ist, von unten nach oben, bei der Ausführungsvariante nach Figur 2 dagegen von oben nach unten durchströmt. Die Injektordüsen 17 bzw. 17' sind demnach unterhalb der Wirbelkammer 11 bzw. über dieser angeordnet.

Durch den Flüssigkeitsstrahl S werden aus dem die Wirbelkammer 11 umgebenden Trägermedium 21 bzw. 21' Teile nach dem Wasserstrahlprinzip herausgelöst, in den Flüssigkeitsstrahl S eingesaugt und durch den Innenraum 13 des Standrohres 12 transportiert. Dabei wird von diesen die überschüssige Biomasse durch Scherkräfte abgelöst, so daß gereinigte Teile auf dem Trägermedium 21 abgelagert werden bzw. zu dem auf der gereinigten Flüssigkeit 22' schwimmenden Trägermedium 21' gelangen. Durch in die Wirbelkammer 11 eingesetzte Einbauten, z. B. in Form von Stegen, Lochblechen oder dgl., kann in deren Innenraum 13 die Strömung mehr oder weniger umgelenkt werden, so daß auch dadurch die Scherung und damit die Reingung der einzelnen Teile des Trägermediums 21 bzw. 21' zu beeinflussen ist.

Durch die einstellbare Strömung in der Wirbelkammer 11 kann der Reinigungsgrad bestimmt werden. Durch ständiges oder zeitweises Umwälzen des Trägermediums 21 bzw. 21' und der dabei in der Wirbelkammer 11 vorgenommenen Reinigung von überschüssiger Biomasse bleibt somit das Durchlaufvermögen des Trägermediums 21 bzw. 21' konstant, ohne daß der Festbettreaktor 1 bzw. 1' zur Reaktivierung der Trägermedien 21 bzw. 21' stillzusetzen ist.

## Patentansprüche

1. Festbettraktor (1) zum mikrobiellen Abbau und/oder zur mikrobiellen Umwandlung organisch belasteter Substrate, bestehend aus mindestens einem Aufnahmebehälter (2) und einem in diesen eingeschütteten Trägermedium (21) zum Ansiedeln der Bakterien, das von der zu reinigenden Flüssigkeit durchströmbar ist, wobei in dem Aufnahmebehälter (2) eine oder mehrere von dem Trägermedium (21) vertikal durchströmbare durch vorzugsweise zentrisch in den Aufnahmebehälter (2) eingesetzte Standrohre (12) gebildete Wirbelkammern (11) angeordnet sind,
**dadurch gekennzeichnet,**
**daß** das Trägermedium (21) jeweils mittels eines Flüssigkeitsstrahls (S) in eine Wirbelkammer (11) einbringbar ist, derart, daß vor der Wirbelkammer (11) in dem Trägermedium (21, 21') eine Injektordüse (17, 17') angeordnet ist, mittels der der Flüssigkeitsstrahl (S) der Wirbelkammer (1) zuführbar ist und daß der Flüssigkeitsstrahl (S) aus der gereinigten Flüssigkeit (22, 22') entnommen ist.

2. Festbettreaktor nach Anspruch 1,
**dadurch gekennzeichnet,**
**daß** der Injektordüse (17, 17') über eine mit einer steuerbaren Förderpumpe (19, 19') versehenen Leitung (18, 18') vorzugsweise imputsweise oder in einstellbaren Zeitabständen die das Trägermedium (21, 21') durchströmte Flüssigkeit (22, 22') zuführbar ist.

3. Festbettreaktor nach Anspruch 1,
**dadurch gekennzeichnet,**
**daß** die Wirbelkammer (11) derart in dem Aufnahmebehälter (2) angeordnet ist, daß deren Einlaßöffnung (14, 14') in dem Trägrmedium (21, 21') und deren Auslaßöffnung (15, 15') in der dieses durchströmten Flüssigkeit (22, 22') mündet.

4. Festbettreaktor nach einem oder mehreren der Ansprüche 1 bis 3,
**dadurch gekennzeichnet,**
**daß** die Wirbelkammer (123) zur Umlenkung der Strömung mit Einbauten in Form von Stegen, Lochblechen oder dgl. versehen ist.

5. Festbettreaktor nach einem oder mehreren der
Ansprüche 1 bis 4,
**dadurch gekennzeichnet,**
**daß** das Trägermedium (21) im unteren Bereich des Aufnahmbehälters (2) in diesen eingeschüttet und die Injektordüse (17) unterhalb der Wirbelkammer (11) angeordnet ist.

6. Festbettreaktor nach einem oder mehreren der
Ansprüche 1 bis 4,
**dadurch gekennzeichnet,**
**daß** das Trägermedium (21') im oberen Bereich des Aufnahmebehälters (2) vorgesehen und die Injektordüse (17') über der Wirbelkammer (11) angeordnet ist.

7. Festbettreaktor nach einem oder mehreren der
Ansprüche 1 bis 6,
**dadurch gekennzeichnet,**
**daß** der Aufnahmebehälter (2) zur Einbringung des Substrates mit einer vorzugsweise in den vertikal unteren Bereich des Trägermediums (21, 21') in dieses einmündenden Einlaßleitung (7, 7') versehen ist.

8. Festbettreaktor nach Anspruch 7,
**dadurch gekennzeichnet,**
**daß** die Einlaßleitung (7") zur Einbringung des Substrates in den Aufnahmebehälter (2) unmittelbar an die Injektordüse (17') oder an die dieser zugeordneten Zuführungsleitung (18') angeschlossen ist.

9. Festbettreaktor nach einem oder mehreren der
Ansprüche 1 bis 7,
**dadurch gekennzeichnet,**
**daß** der Aufnahmebehälter (2) einen kegelstumpfartig ausgebildeten Boden (3) und eine in diesem vorgesehene wahlweise zu Öffnende Austragöffnung (4) aufweist.

10. Festbettreaktor nach einem oder mehreren der
Ansprüche 1 bis 9,
**dadurch gekennzeichnet,**
**daß** der Aufnahmebehälter (2) eine vorzugsweise mit einem Syphon (10) versehene Überlaufleitung (9) oder eine mit einem Absperrventil (10') ausgestattete Entnahmeleitung (9') zur Ausbringung der gereinigten Flüssigkeit (22, 22') aufweist.

## Claims

1. A fixed-bed reactor (1) for the microbial decomposition and/or microbial transformation of organically polluted substrates, comprising at least a holding container (2) and a carrier medium (21) in which the bacteria live which is poured into the holding container (2) and through which the fluid to be cleaned can flow, with one or more swirl chambers (11) arranged in the holding container (2) such that the carrier medium (21) can flow through the swirl chambers (11) vertically and, in a preferred embodiment, the swirl chambers (11) are formed by upright pipes (12) arranged centrally in the holding container (2),
**characterized in that**,
the carrier medium (21) can be conveyed to each swirl chamber (11) by means of a jet of fluid (S) in such a way that an injector nozzle (17, 17') is arranged in the carrier medium (21, 21') before the swirl chamber (11) and the injector nozzle (17, 17') can direct the jet of fluid (S) into the swirl chamber (11), and that the jet of fluid (S) is taken from the cleaned fluid (22, 22').

2. The fixed-bed reactor in accordance with Claim 1,
**characterized in that**,
the fluid (22, 22') flowing through the carrier medium (21, 21') can be supplied to the injector nozzle (17, 17') via a pipe (18, 18') provided with a controllable feed pump (19, 19'), with this feed operating, in a preferred embodiment, pulse-by-pulse or at adjustable time intervals.

3. The fixed-bed reactor in accordance with Claim 1,
**characterized in that,**
the swirl chambers (11) are arranged in the holding container (2) in such a way that their inlet opening (14, 14') is located in the carrier medium (21, 21') and their outlet opening (15, 15') is located in the fluid (22, 22') which has flowed through the carrier medium (21, 21').

4. The fixed-bed reactor in accordance with one or more of Claims 1 to 3,
**characterized in that,**
the swirl chamber (123) is provided with inserts in the form of webs, perforated plates or the like in order to deflect the flow.

5. The fixed-bed reactor in accordance with one or more of Claims 1 to 4,
**characterized in that,**
the carrier medium (21) in the bottom part of the holding container (2) is poured into the holding container (2) and the injector nozzle (17) is arranged below the swirl chamber (11).

6. The fixed-bed reactor in accordance with one or more of Claims 1 to 4,
**characterized in that,**
the carrier medium (21') is provided in the bottom part of the holding container (2) and the injector nozzle (17') is arranged above the swirl chamber (11).

7. The fixed-bed reactor in accordance with one or more of Claims 1 to 6,
**characterized in that,**
the holding container (2) is provided with an inlet pipe (7, 7') in order to feed in the substrate and, in a preferred embodiment, the inlet pipe (7, 7') emerges into the vertically lower area of the carrier medium (21, 21').

8. The fixed-bed reactor in accordance with Claim 7,
**characterized in that,**
the inlet pipe (7") for feeding the substrate into the holding container (2) is directly connected to the injector nozzle (17') or to the feed pipe (18') for the injector nozzle (17').

9. The fixed-bed reactor in accordance with one or more of Claims 1 to 7,
**characterized in that,**
the holding container (2) has a truncated conical base (3) and an unloading opening (4) is provided in this base (3) which can be opened as an option.

10. The fixed-bed reactor in accordance with one or more of Claims 1 to 9,
**characterized in that,**
the holding container (2) has an overflow pipe (9) which, in a preferred embodiment, is provided with a siphon (10) or the holding container (2) has an outflow pipe (9') equipped with a shut-off valve (10') in order to remove the cleaned fluid (22, 22').

## Revendications

1. Réacteur à lit fixe (1) pour la décomposition et/ou la transformation microbienne de substrats chargés organiquement, comprenant au moins un réservoir (2) et un milieu de support (21) qui y est versé pour l'établissement de bactéries, le milieu se laissant traverser par le liquide à purifier, réservoir (2) comportant des chambres de tourbillonnement (11) formées par un ou par plusieurs tuyaux verticaux (12) disposés de préférence centrés dans le réservoir (2) et traversés verticalement par le milieu de support (21),
**caractérisé en ce que**
le milieu de support (21) respectif se laisse insérer au moyen d'un jet de liquide (S) dans une chambre de tourbillonnement (11) de sorte qu'en amont de la chambre de tourbillonnement (11), il est disposé une buse d'injection (17, 17') dans le milieu de support (21, 21') qui permet d'injecter le jet de liquide (S) dans la chambre de tourbillonnement (11) et de sorte que le jet de liquide (S) est prélevé du liquide purifié (22, 22').

2. Réacteur à lit fixe d'après la revendication 1,
**caractérisé en ce que**
le liquide (22, 22') traversant le milieu de support (21, 21') est dirigé par l'intermédiaire d'une conduite (18, 18') équipée d'une pompe de refoulement réglable (19, 19'), soit de manière pulsée, soit à intervalles réguliers, vers la buse d'injection (17, 17').

3. Réacteur à lit fixe d'après la revendication 1,
**caractérisé en ce que**
la chambre de tourbillonnement (11) est disposée dans le réservoir (2) de sorte que son ouverture d'arrivée (14, 14') débouche dans le milieu de support (21, 21') et son ouverture de sortie (15, 15') dans le liquide (22, 22') qui le traverse.

4. Réacteur à lit fixe d'après une ou plusieurs des revendications 1 à 3,
**caractérisé en ce que**
pour la déviation du flux, la chambre de tourbillonnement (11) comporte des traverses, des tôles perforées etc.

5. Réacteur à lit fixe d'après une ou plusieurs des revendications 1 à 4,
**caractérisé en ce que**
le milieu de support (21) est introduit au niveau inférieur du réservoir (2) dans celui-ci et que la buse d'injecteur (17) est disposée en dessous de la chambre de tourbillonnement (11).

6. Réacteur à lit fixe d'après une ou plusieurs des revendications 1 à 4,
**caractérisé en ce que**
le milieu de support (21') est prévu au niveau supérieur du réservoir (2) et que la buse d'injecteur (17') est disposée au-dessus de la chambre de tourbillonnement (11).

7. Réacteur à lit fixe d'après une ou plusieurs des revendications 1 à 6,
**caractérisé en ce que**
pour l'introduction du substrat, le réservoir (2) est équipé d'une conduite d'arrivée (7, 7') débouchant de préférence dans la partie inférieure verticale du milieu de support (21, 21').

8. Réacteur à lit fixe d'après la revendication 7,
**caractérisé en ce que**
la conduite d'arrivée (7") pour l'introduction du substrat dans le réservoir (2) est raccordée directement sur la buse d'injection (17') ou sur la conduite d'arrivée (18') attribuée à celle-ci.

9. Réacteur à lit fixe d'après une ou plusieurs des revendications 1 à 7,
**caractérisé en ce que**
le réservoir (2) comporte un fond (3) de préférence tronconique et dans celui-ci, une ouverture de sortie (4) se laissant ouvrir et fermer.

10. Réacteur à lit fixe d'après une ou plusieurs des revendications 1 à 9,
**caractérisé en ce que**
pour la sortie du liquide purifié (22, 22'), le réservoir (2) est équipé d'une conduite de surverse (9) munie de préférence d'un siphon (10) ou d'une conduite de prélèvement (9') munie d'une valve de barrage (10').
